(19) **Europäisches Patentamt European Patent Office Office européen des brevets**

(11) **EP 1 570 953 B1**

(12) **EUROPEAN PATENT SPECIFICATION**

(45) Date of publication and mention
of the grant of the patent:
**01.07.2009 Bulletin 2009/27**

(51) Int Cl.:
***B24C 1/10*** *(2006.01)*    ***C04B 35/10*** *(2006.01)*
***C23C 30/00*** *(2006.01)*

(21) Application number: **03756617.1**

(22) Date of filing: **15.10.2003**

(86) International application number:
**PCT/JP2003/013178**

(87) International publication number:
**WO 2004/035266 (29.04.2004 Gazette 2004/18)**

(54) **METHOD FOR IMPROVING TOUGHNESS OF SURFACE OF CERAMIC AND CERAMIC ARTICLE**

VERFAHREN ZUR VERBESSERUNG DER FESTIGKEIT DER OBERFLÄCHE VON KERAMIK UND KERAMIKARTIKEL

PROCEDE DESTINE A AMELIORER LA RESISTANCE DE SURFACE DE LA CERAMIQUE ET D'UN ARTICLE EN CERAMIQUE

(84) Designated Contracting States:
**CH DE FR GB LI**

(30) Priority: **15.10.2002 JP 2002300765**

(43) Date of publication of application:
**07.09.2005 Bulletin 2005/36**

(73) Proprietor: **SINTOKOGIO, LTD.**
**Nakamura-ku**
**Nagoya-shi**
**Aichi 466-0833 (JP)**

(72) Inventors:
• **SAKA, Hiroyasu**
**Kasugai-shi, Aichi 487-0017 (JP)**

• **MOON, Won-Jin**
**Seo ku Daejeon (KR)**
• **UCHIMURA, Shouji**
**Nagoya-shi, Aichi 458-0833 (JP)**
• **ITO, Toshiro**
**Toyokawa-shi, Aichi 442-0068 (JP)**

(74) Representative: **McCluskie, Gail Wilson et al**
**J.A. Kemp & Co.**
**14 South Square**
**Gray's Inn**
**London WC1R 5JJ (GB)**

(56) References cited:
**WO-A1-02/24605**      **JP-A- 4 331 070**
**JP-A- 7 157 362**      **JP-A- 2001 181 099**

EP 1 570 953 B1

**Description**

FIELD OF THE INVENTION

The present invention relates to a method for surface toughening of ceramics product by forming a linear dislocation structure distributed uniformly in the sub-surface regions of the products by plastic working at room temperature using abrasives composed of fine particles having hardness smaller than that of the ceramics product and whose surfaces are convex, in other words, not having sharpened edge, that is, by shot blasting treatment, in particular, a method for surface toughening of the ceramics product only by plastic working without annealing treatment after the plastic working (shot blasting treatment). A surface toughened ceramic product is obtained which has a linear dislocation structure distributed uniformly in the sub-surface regions of the product.

DESCRIPTION OF THE PRIOR ART

Ceramics materials are broadly used in various fields because they are excellent in thermal stability, high temperature strength, hardness, elastic modulus, electric insulation, piezoelectricity or corrosion-resistance. However, since ceramic materials have defects of being hard and brittle materials, in actual use of the ceramics material where above mentioned excellent properties are practically used, specifically, gas turbine, parts for heat engine e.g. car, parts for mechanical structural unit such as spring and gear, sensor, actuator unit or parts for micro machine using single crystal material such as silicon wafer, yttrium·aluminum·garnet (YAG) and sapphire or polycrystal material such as barium titanate and lead zirconate titanate (PZT), life time of product or mechanical reliability are remarkably inferior to that of metal and these points are pointed out as the problem of the ceramics materials.

In the meanwhile, work hardening which accumulates lattice defects such as dislocation in the crystal with deformation of crystal material is the most popular toughening method for crystal material. However, said toughening method is considered to be applied broadly for the ductile materials such as metal material which can introduce lattice defects e.g. dislocation in large quantities into crystal material, but in the case of brittle materials, it is considered that the plastic deformation is impossible. Recently, Hiroyasu Saka and Won-Jin Moon have developed the following method as a novel method for surface toughening of a brittle crystal material. That it, after forming minute indentations of 0.001 to 1 $\mu$m groove width on the surface of a brittle crystal material at a density of from 500 to 10,000 pieces/mm$^2$ using a Vickers hardness tester at room temperature, introducing a dislocation sub-boundary simultaneously at the time when said minute indentations disappear, substantially in an atmosphere between 0.5 $T_M$ and $T_M$, where $T_M$ is the absolute temperature of the melting point (W.J. Moon and H. Saka, PHILOSOPHICAL MAGAZINE LETTERS, 2000, Vol. 80, No. 7,461-466, Document 1). Further, Hiroyasu Saka, Won-Jin Moon, Shouji Uchimura and Hideki Morimitsu proposed an improved technique which carried out a process before an annealing treatment using a technique of the plastic working (shot blasting treatment) for said initial technology (WO02/24605 A1, especially, refer to Example in pages 8 to 19, Document 2).

However, both of the above mentioned processes require a step of plastic working (shot blasting treatment) and an annealing treatment after said plastic working. That is the combination of said two processes are needed. Therefore, these prior processes have complexity in that the management of the treating process must be carried out by a combination of the two processes, resulting in problems of dimensional alteration of the product, alteration of characteristics, stability of the product and reliability. Further, there is a problem of energy consumption, and technical improvement is needed.

JP-A-4331070 relates to improvement of the hardness of a metal tool surface by a method including shot blasting the surface with e.g. steel balls in order to protect against metal fatigue and to increase high temperature brittleness of the metal tool.

JP-A-7157362 provides an $Al_2O_3$-based ceramic material having improved strength and toughness, prepared by introducing dislocation density of from $1 \times 10^4$ to $9 \times 10^{14}$ cm$^{-2}$ by carrying out a high temperature pressing process at temperature of from 1,300 to 1,400°C, at a processing ratio from 40 to 90% and under a stress of about 50 MPa.

The subject of the present invention is to provide a method for surface toughening of a ceramics product from which the defects of the prior art materials are solved. Further, the subject of the present invention is to provide a ceramic product having specific properties obtained by a method for surface toughening which does not need an annealing treatment. For solving the above mentioned problems, the inventors of the present invention, continued enormous number of experiments by trial and error which alter the factors of conventional plastic working (shot blasting treatment) such as HV hardness of abrasives, shape and plastic working (shot blasting treatment) condition. Among the enormous number of experiments, surprisingly, the inventors of the present invention have found that only uniformly distributed linear dislocations which bring surface toughening without conventional annealing treatment, without generating micro-cracking, can be introduced into the treated ceramic product. Furthermore, it becomes clear from observations by a transmission electron microscope of the structure formed on the surface of the ceramic product is quite different from a structural observation by a transmission electron microscope of the structure formed by the conventional plastic working (shot blasting treatment) and annealing treatment. That is, by the method of the invention, the above mentioned problems are solved.

## SUMMARY OF THE INVENTION

The present invention provides (1) a method for surface toughening of a ceramic product comprising, forming uniformly distributed linear dislocation structure in the sub-surface regions within a depth of from 30 $\mu$m from the most exterior surface of the ceramic product and a dislocation density in the range of from 1 x10$^4$ to 9x10$^{13}$ cm$^{-2}$, without annealing, by using abrasives composed of fine particles having convexly curved surface and having an average particle size of 0.1 $\mu$m to 250 $\mu$m and a Vickers hardness (HV) of 500 or more and the hardness (HV) of the particles is +50 or less of that of the ceramic products. Preferably the invention provides (2) a method for surface toughening of a ceramic product prepared in (1), wherein the uniformly distributed linear dislocation structure in the sub-surface regions of the ceramic product is formed without annealing by plastic working, carried out by shot blasting said abrasives at a pressure of 0.1 to 0.5 MPa, a shot blasting speed of 20 m/sec to 250 m/sec and a shot blasting time of from 0.1 sec/cm$^2$ to 60 sec/cm$^2$. While, in the present invention, the plastic working at room temperature indicates that the atmosphere in which plastic working is carried out is under room temperature and the temperature of the surface of the product after plastic working, and the product surface after plastic working obtains a part of kinetic energy of the abrasives. Accordingly, the temperature is elevated above room temperature from a microscopic view point.

A ceramic product is obtained, possessing the structure whose dislocation density of uniformly distributed linear dislocation structure in the sub-surface regions of the ceramic product is in the range of from $1 \times 10^4$ to $9 \times 10^{13}$ cm$^{-2}$.

## BRIEF DESCRIPTION OF THE DRAWINGS

Fig. 1 is the conceptual view of an apparatus to carry out shot blasting treatment which realize room temperature plastic working of the present invention. 1 is a cabinet of said apparatus and 2 is a door of the cabinet.

Fig.2 is a picture by a transmission electron microscope of structure which forms uniformly distributed linear dislocations obtained by a method for surface toughening of the present invention, wherein (B) is an enlarged drawing of the marked part of (A).

Fig.3 is a transmission electron microscopic picture of dislocation cells (net work) formed by a conventional plastic working (shot blasting treatment) and annealing treatment.

## DESCRIPTION OF THE PREFERRED EMBODIMENT

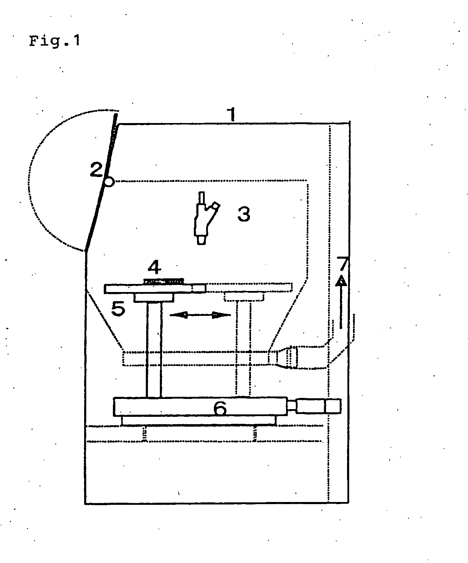

The present invention will be illustrated more in detail. A. Fig.1 is an apparatus to carry out the shot blasting treatment which realize room temperature plastic working of the present invention, and is the conceptual view of Microblaster MBI type apparatus (nozzle diameter: 8$\Phi$mm, shot blasting distance: 150mm), product of SINTOBRATOR Ltd, which is possible to stabilize the processing precision by quantitative supply of fine particles.

Plastic working (shot blasting treatment) of the present invention is aiming not to leave scratches on the surface of ceramics product to be treated and the surface shape of fine particles used for the shot blasting treatment and the relative value of the fine particles to the hardness of ceramic which consists of ceramic product to be treated are different from the conventional technique. From the fact that there is remarkable difference between the ceramic structure formed on said ceramic product to be treated and the ceramic structure formed by a conventional plastic working and annealing treatment, the plastic working of the present invention can be said functionally as "shot blasting treatment for forming surface toughening structure".

Regarding the hardness of the fine abrasive particles, the upper limit that Vickers hardness of the fine abrasive particles is +50 (HV) or less than the hardness of the ceramic product is restricting the range in which a defect such as chipping does not occur.

In Fig.1, abrasive particles for plastic working which are different in accordance to ceramics product to be treated are shot blasted toward said ceramics product, which is a board shape ceramics product 4 is held by a product holding pat consisting of a table 5 which can move to X-Y direction, by controlling blasting pressure and blasting amount from a blasting nozzle 3. By making the blasting nozzle movable to X-Y direction, same effect can be obtained. Used abrasive particles for plastic working are recovered by a recovering apparatus 7, separated from deteriorated abrasive particles and recycled. Abrasive particles can be jetted with gas or with liquid like as liquid honing.

The restriction of blasting speed from 20m/sec to 250m/sec is the condition to jet the abrasive particles vertically toward the surface of specimen at the measurement of fracture toughness of blasting treatment. Further, the lower limit of the blasting speed is the restriction from the view point of workability of the plastic working (shot blasting) treatment and the upper limit of the blasting speed is the limit to restrict the range in which a defect such as chipping does not occur.

The hardness of abrasive particles for plastic working which are used in the present invention is less than that of the ceramics product to be processed and is desirable to use fine particles having convexly curved surface material not having sharpened edge which do not leave scratches on the surface of the ceramics product to be processed and do not wear the surface of the ceramics product to be processed excessively. Further, it is desirable that the shape of fine particle is spherical.

The particle size of the abrasive particles for plastic working is the important factor relating to the improvement of fracture toughness value $K_{IC}$ of the ceramic product to be processed. And, the smaller particle size becomes, the easier the plastic working of the ceramics product of the complicated surface shape by the present invention becomes.

From the functional view point, the plastic working shot blasting that can be applied to the deformation composed of two or more processes changing the size of the abrasive particles for plastic working, hardness, blasting pressure, blasting amount or by changing the combination of these factors, and it is desirable to design the processing conditions considering the characteristics required to the ceramic products to be processed.

Measuring apparatuses used for the investigation of the characteristics of the toughened ceramics product produced by the method for surface toughening of the present invention will be illustrated below.

> a. Dislocation density and structure: Thin film specimen for TEM observation is prepared by an Focused Ion Beam Apparatus (Hitachi F-2000) and the structural characteristics is observed by a transmission electron microscope (TEM) JEOL-200CX (accelerating voltage: 200kV), product of JAPAN ELECTRON OPTICS LABORATORY CO., Ltd. Dislocation density can be obtained by measuring the dislocation length per unit volume. Concretely, the dislocation density is measured by following procedure, that is, (1) measure the thickness of a thin film specimen, (2) take a TEM observation picture of the point where dislocation density is measured, (3) measure the length of dislocation contained in the unit volume.
>
> b. Fracture toughness; Fracture toughness is measured based on Indentation-Fracture method (IF method) prescribed in JIS R 1607.

The specimen is ground and polished by a diamond abrasive paper of #600, #1000, #3000 in order then by $1\mu$ alumina suspension so as to obtain surface roughness of 0.2S or less.

Using a Vickers hardness tester, the optimal value of indentation load is selected from 100gf, 200gf, 300gf, 500gf, 5kgf and 10kgf according to a quality of the testing material. Holding time of load is set to 15sec.

By measuring the diagonal length of indentation mark and length of crack generates from 4 corners of indentation mark (2c, unit; m), fracture toughness value is calculated by following numerical formula.

$$K_{IC} = 0.018(E/HV)^{1/2}(P/C^{3/2})$$

Wherein, $K_{IC}$ is fracture toughness ($MPa \cdot m^{1/2}$), E is Young modulus (Pa), HV is Vickers Hardness (Pa), P is pressing load (N), c is the half of the total length of a crack (m).

EXAMPLE

The present invention will be illustrated more specifically according to Examples, however, the Examples are only aiming for easy understanding of the present invention and not intending to limit the scope of the present invention.

Examples 1-4, Comparative Example 1

As the ceramics product to be processed, a specimen composed of board shape silicon nitride of 4mm width × 40mm length × 3mm thickness (silicon nitride A), which is Refaceram, product of Japan Fine Ceramics Center whose hardness is 1370HV and bending strength is 1115MPa is used.

Plastic working (shot blasting) is carried out by jetting abrasives vertically to the surface of specimen from the thickness direction, and measurements of dislocation density by TEM observation and Fracture toughness value are measured by an indentation fracture (IF) method. In Table 1, conditions for plastic working (shot blasting) and results for quality characteristics of silicon nitride A of before and after processing are shown. Of cause, in the actual plastic working (shot blasting), the blasting can be carried out with an inclination to the surface of the product, and can select the impact angle considering the surface shape of the product. Since the effect of plastic working (shot blasting) to the surface to be processed is depending to the vertical force to the surface to be processed, in the case to carry out blasting having an inclination, it is necessary to adjust the conditions of plastic working (shot blasting) such as blasting force considering the impact angle.

EP 1 570 953 B1

## Table 1 Measuring results of fracture toughness of silicon nitride A

| No | specimen | | | abrasives | | | shot blasting condition | | | | surface roughness Ra $\mu$m | | hardness HV (after process) | dislocation density /cm² | $K_{IC}$ MPa·m$^{1/2}$ | improved ratio of $K_{IC}$ |
| | material | hardness HV | bending strength MPa | material | size $\mu$m | hardness HV | blasting | | | | before process | after process | | | | |
| | | | | | | | pressure MPa | amount g/min | speed m/s | time sec/cm² | | | | | | |
| Co.1 | silicon nitride A | 1370 | 1115 | — | — | — | — | — | — | — | — | — | — | — | 6.39 | 1.00 |
| Ex.1 | | 1370 | 1115 | zircon | 200 | 810 | 0.35 | 400 | 50 | 12 | 0.038 | 0.046 | 1380 | $3.9 \times 10^{10}$ | 7.12 | 1.11 |
| Ex.2 | | 1370 | 1115 | alumina | 250 | 1300 | 0.4 | 400 | 50 | 2 | 0.038 | 0.067 | 1410 | $8.2 \times 10^{12}$ | 9.40 | 1.47 |
| Ex.3 | | 1370 | 1115 | zirconia | 50 | 1380 | 0.4 | 600 | 70 | 4 | 0.039 | 0.050 | 1422 | $6.3 \times 10^{13}$ | 15.10 | 2.36 |
| Ex.4 | | 1370 | 1115 | zirconia | 90 | 1380 | 0.4 | 600 | 60 | 4 | 0.039 | 0.063 | 1460 | $8.9 \times 10^{13}$ | *1 | |

Co.: Comparative Example   Ex.: Example   $K_{IC}$: fracture toughness

*1: can not calculate because crack is not formed

From the results in Table 1, it is clearly understood that the fracture toughness of the processed products prepared according to the present invention (Examples 1-4) is improved in proportion to dislocation density formed on the surface of specimen after plastic working (shot blasting) at room temperature (comparison with Comparative Example 1). Especially, the effect for improved ratio of the fracture toughness of Examples 3 and 4 which use specimen of silicon nitride A is remarkable. In Example 3, the improved ratio of the fracture toughness is 2.4 times, further, in Example 4, after a diamond load is loaded on the surface of specimen, cracks to be generated from 4 corners of an indentation are not recognized, consequently the value of "c" (the half of the total length of a crack) to be substituted into above mentioned numerical formula for calculation of fracture toughness becomes zero and the toughening as much as the calculated value of fracture toughness becomes infinite is accomplished. Said remarkable improvement of fracture toughness is not an expected effect, and indicates that the developed toughening method is a very novel technique. Further, the hardness of the processed products of the present invention is recognized to be increased along with the increase of the dislocation density formed in the sub-surface regions of specimen.

Examples 5-10, Comparative Example 2

As the ceramics product to be processed, a specimen of board shape silicon nitride of 13mm × 40mm × 3mm (silicon nitride B), which is the product of NGK SPARK PLUG Co., Ltd., whose hardness is 1380HV and bending strength is 1100MPa is used. Plastic working (shot blasting) is carried out by jetting abrasives vertically to the surface of specimen from the thickness direction, and measurements of dislocation density by TEM observation and Fracture toughness are measured by an indentation fracture (IF) method. In Table 2, conditions for plastic working (shot blasting) and results for quality characteristics of silicon nitride B of before and after processing are shown.

Table 2　Measuring results of fracture toughness of silicon nitriide B

| No | specimen | | | abrasives | | | shot blasting condition | | | | surface roughness Ra $\mu$m | | hardness HV (after process) | dislocation density /cm² | $K_{IC}$ MPa · m¹ᐟ² | improved ratio of $K_{IC}$ |
|---|---|---|---|---|---|---|---|---|---|---|---|---|---|---|---|---|
| | material | hardness HV | bending strength MPa | material | size $\mu$m | hardness HV | blasting | | | | before process | after process | | | | |
| | | | | | | | pressure MPa | amount g/min | speed m/s | time sec/ cm² | | | | | | |
| Co.2 | silicon nitride B | 1380 | 1100 | — | — | — | — | — | — | — | — | — | — | — | 5.64 | 1.00 |
| Ex.6 | | 1380 | 1100 | zircon | 200 | 810 | 0.4 | 400 | 50 | 12 | 0.012 | 0.137 | 1482 | $3.9 \times 10^{10}$ | 5.83 | 1.03 |
| Ex.7 | | 1380 | 1100 | zircon | 200 | 810 | 0.4 | 400 | 50 | 24 | 0.011 | 0.189 | 1474 | $2.9 \times 10^{11}$ | 6.33 | 1.12 |
| Ex.5 | | 1380 | 1100 | mullite | 100 | 1020 | 0.2 | 400 | 45 | 12 | 0.012 | 0.344 | 1430 | $7.7 \times 10^{12}$ | 9.69 | 1.72 |
| Ex.8 | | 1380 | 1100 | mullite | 100 | 1020 | 0.4 | 400 | 60 | 12 | 0.012 | 0.587 | 1555 | $5.4 \times 10^{12}$ | 9.87 | 1.75 |
| Ex.9 | | 1380 | 1100 | mullite | 100 | 1020 | 0.4 | 400 | 60 | 36 | 0.012 | 0.806 | 1545 | $3.1 \times 10^{13}$ | — *2 | — |
| Ex. 10 | | 1380 | 1100 | zirconia | 50 | 1380 | 0.2 | 600 | 50 | 4 | 0.012 | 0.188 | 1508 | $6.3 \times 10^{13}$ | 13.80 | 2.45 |

Co. : Comparative Example　Ex. : Example　　$K_{IC}$ : fracture toughness

*2 :　Can not calculate because of generation of chippings

From the results in Table 2, it is clearly understood that the fracture toughness value of the processed products prepared according to the present invention is improved in proportion to dislocation density formed in the sub-surface regions of specimen after shot blasting treatment at room temperature. In the case of Example 9, which indicates that very high dislocation density formed in the sub-surface regions of specimen after shot blasting treatment, chipping generates on the surface of the specimen and the measurement of the fracture toughness is impossible. The reason why is considered that when the numbers of dislocation becomes large, cracking generates by the reaction between dislocations and the generation of chipping at shot blasting becomes easy to generate.

Examples 11-14, Comparative Example 3

As the ceramics product to be processed, a specimen of board shape aluminum nitride of 7mm width $\times$ 40mm length $\times$ 3mm thickness, which is the product of DENKI KAGAKU KOGYO K.K., whose hardness is 1090HV and bending strength is 1100MPa is used.
Plastic working (shot blasting) is carried out by jetting abrasives vertically to the surface of specimen from the thickness direction, and measurements of dislocation density by TEM observation and Fracture toughness are measured by an indentation fracture (IF) method. In Table 3, conditions for plastic working (shot blasting) and results for quality characteristics of aluminum nitrate of before and after processing are shown.

Table 3 Measuring results of fracture toughness of aluminum nitride

| No | specimen | | | abrasives | | | shot blasting condition | | | | surface roughness Ra $\mu$m | | hardness HV (after process) | dislocation density /cm² | $K_{IC}$ MPa · m¹ᐟ² | improved ratio of $K_{IC}$ |
|---|---|---|---|---|---|---|---|---|---|---|---|---|---|---|---|---|
| | material | hardness HV | bending strength MPa | material | size $\mu$m | hardness HV | blasting | | | | before process | after process | | | | |
| | | | | | | | pressure MPa | amount g/min | speed m/s | time sec/ cm² | | | | | | |
| Co.3 | alumin um nitride | 1060 | 390 | — | — | — | — | — | — | — | — | — | — | — | 3.03 | 1.00 |
| Ex.11 | | 1060 | 390 | zircon | 50 | 810 | 0.15 | 400 | 45 | 4 | 0.185 | 0.223 | 1065 | $1.9 \times 10^9$ | 3.66 | 1.21 |
| Ex.12 | | 1060 | 390 | zircon | 200 | 810 | 0.15 | 400 | 30 | 4 | 0.187 | 0.219 | 1078 | $7.8 \times 10^{11}$ | 4.90 | 1.62 |
| Ex.13 | | 1060 | 390 | mullite | 100 | 1020 | 0.13 | 300 | 40 | 0.4 | 0.174 | 0.237 | 1055 | $9.2 \times 10^8$ | 3.41 | 1.13 |
| Ex.14 | | 1060 | 390 | zirconia | 50 | 1380 | 0.14 | 600 | 50 | 0.4 | 0.189 | 0.607 | — | $2.9 \times 10^8$ | — *2 | — |

Co.: Comparative Example   Ex.: Example   $K_{IC}$: fracture toughness

*2: Can not calculate because of generation of chippings

EP 1 570 953 B1

From the results in Table 3, it is clearly understood that the fracture toughness of the processed products prepared according to the present invention is improved in proportion to dislocation density formed in the sub-surface regions of specimen after shot blasting treatment at room temperature likewise to the testing results of silicon nitride A and B. In the case of Example 14, which indicates that very high dislocation density formed in the sub-surface regions of specimen after shot blasting treatment, likewise to Example 9 using a specimen of silicon nitride B, chipping generates on the surface of the specimen and the measurement of the fracture toughness is impossible. The reason why is considered that when the numbers of dislocation becomes large, cracking generates by the reaction between dislocations and the generation of chipping at shot blasting becomes easy to generate.

Examples 15-17, Comparative Example 4

As the ceramics product to be processed, a specimen of board shape alumina, $Al_2O_3$: 99.5% of 10mm$\times$10mm$\times$3mm, which is the product of Sinto V-ceracs Co., Ltd., whose hardness is 1090HV and bending strength is 1100MPa is used. Plastic working (shot blasting) is carried out by jetting abrasives vertically to the surface of specimen from the thickness direction, and measurements of dislocation density by TEM observation and Fracture toughness are measured. In Table 4, conditions for plastic working (shot blasting) and results for quality characteristics of alumina of before and after processing are shown.

Table 4 Measuring results of fracture toughness of alumina

| No | specimen | | | abrasives | | | shot blasting condition | | | | | surface roughness Ra $\mu$m | | hardness HV (after process) | disloca-tion density /cm$^2$ | $K_{IC}$ MPa $\cdot$ m$^{1/2}$ | improv-ed ratio of $K_{IC}$ |
|---|---|---|---|---|---|---|---|---|---|---|---|---|---|---|---|---|---|
| | mate-rial | hard-ness HV | bending strength MPa | mate-rial | size $\mu$m | hard-ness HV | blasting | | | | before process | after process | | | | | |
| | | | | | | | pressure MPa | amo-unt g/min | speed m/s | time sec/ cm$^2$ | | | | | | |
| Co.1 | alumi-na | 1700 | 375 | — | — | — | — | — | — | — | — | — | — | — | 3.02 | 1.00 |
| Ex.15 | | 1700 | 375 | zircon | 200 | 810 | 0.35 | 400 | 50 | 12 | 0.233 | 0.249 | 1716 | $4.7\times 10^8$ | 3.12 | 1.03 |
| Ex.16 | | 1700 | 375 | mulli-te | 100 | 1020 | 0.35 | 400 | 60 | 12 | 0.209 | 0.287 | — | $6.7\times 10^{13}$ | *3 | — |
| Ex.17 | | 1700 | 375 | zirco-nia | 50 | 1380 | 0.15 | 600 | 50 | 4 | 0.259 | 0.263 | 1890 | $7.3\times 10^{12}$ | 10.92 | 3.62 |

Co.: Comparative Example   Ex.: Example   $K_{IC}$: fracture toughness

*3: Can not calculate because mirror polishing finish is not impossible. (fine holes newly generates at the polished surface)

EP 1 570 953 B1

From the results of Table 4, it is clearly understood that the fracture toughness of the processed products mode according to the present invention is improved in proportion to dislocation density formed in the sub-surface regions of specimen after shot blasting treatment at room temperature likewise to the above mentioned testing results. Especially, the fracture toughness value of Example 17, which uses alumina specimen is 10.92 which exceeds the fracture toughness of silicon nitride 5-9, recognized as high toughness, that is, surprising toughened effect is accomplished.

Examples 18-22, Comparative Example 5

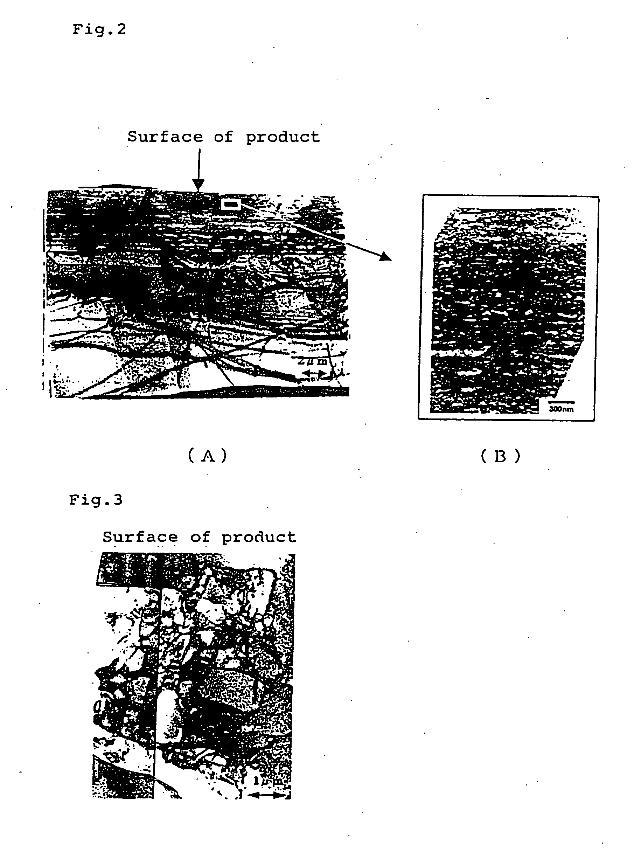

As the ceramics product to be processed, a specimen of single-crystal alumina of 10mm width $\times$ 10mm length $\times$ 1.0mm thickness, which is the product of MTI Corporation whose hardness is 1630HV and bending strength is 1100MPa is used. Plastic working (shot blasting) is carried out by jetting abrasives vertically to the surface of specimen from the thickness direction, and measurements of dislocation density by TEM observation and Fracture toughness are measured. In Table 5, conditions for plastic working (shot blasting) and results for quality characteristics of alumina of before and after processing are shown. In enlarged drawing (B) of Fig.2, dislocation structure extending to lateral direction can be observed and in the present invention, said structure is described as a linear dislocation structure. Fig.3 is the TEM observation picture of processed ceramics product by conventional technique, which is attached for the comparison of dislocation structure formed by the surface toughening process. In Fig.3, dislocation cell structure having net work shape can be observed and is remarkably different from the dislocation structure of Fig.2.

The ceramics product mode according to the present invention have a linear dislocation structure in the range from the outermost surface to 30$\mu$m depth. The dislocation density of this linear dislocation structure becomes low along with the depth, that is, maximum value is shown at the outermost surface. The maximum dislocation density is in the range from $1 \times 10^8$ to $9 \times 10^{13}$cm$^{-2}$.

Table 5    Measuring results of fracture toughness of single-crystal alumina

| No | specimen | | | abrasives | | | shot blasting condition | | | | surface roughness Ra $\mu$m | | hardness HV (after process) | disloca- tion density /cm² | K$_{IC}$ MPa · m$^{1/2}$ | improv- ed ratio of K$_{IC}$ |
| | mate- rial | hard- ness HV | bending strength MPa | mate- rial | size $\mu$m | hard- ness HV | blasting | | | | before process | after process | | | | |
| | | | | | | | pressure MPa | amo- unt g/min | speed m/s | time sec/ cm² | | | | | | |
| Co.5 | single- crystal alumi- na | 1630 | — | — | — | — | — | — | — | — | — | — | — | — | 2.24 | 1.00 |
| Ex.18 | | 1630 | — | mulli- te | 100 | 1020 | 0.3 | 80 | 65 | 1.2 | 0.011 | 0.035 | 1653 | 1.2× 10⁸ | 2.38 | 1.06 |
| Ex.19 | | 1630 | — | mulli- te | 100 | 1020 | 0.45 | 80 | 85 | 1.2 | 0.009 | 0.055 | 1826 | 6.0× 10⁸ | 2.56 | 1.14 |
| Ex.20 | | 1630 | — | mulli- te | 100 | 1020 | 0.45 | 80 | 85 | 3.6 | 0.011 | 0.052 | 1944 | 2.7× 10⁹ | 3.10 | 1.38 |
| Ex.21 | | 1630 | — | mulli- te | 100 | 1020 | 0.45 | 80 | 85 | 6 | 0.012 | 0.063 | 2033 | 1.6× 10¹⁰ | 3.73 | 1.67 |
| Ex.22 | | 1630 | — | mulli- te | 100 | 1020 | 0.45 | 80 | 85 | 12 | 0.010 | 0.057 | 2347 | 1.0× 10¹² | *1 | — |

Co.: Comparative Example    Ex.: Example    K$_{IC}$: fracture toughness

*1: can not calculate because crack is not formed

EP 1 570 953 B1

From the results in Table 5, it is clearly understood that the fracture toughness value of the processed products prepared according to the present invention is improved in proportion to dislocation density formed in the sub-surface regions of specimen after plastic working (shot blasting treatment) at room temperature. Especially, the improved ratio of fracture toughness value of Example 22 using a specimen single-crystal alumina is remarkably good, and from the result that a crack does not generate from 4 corners of an indentation mark marked by loading a diamond indenter on the surface of specimen, it is obvious that the excellent toughening effect as much as fracture toughness can not be calculated is obtained.

Further, from the results of Examples 19 to 22 using a specimen of single-crystal alumina, it is clearly understood that the improved ratio of fracture toughness becomes better along with the prolonging of blasting time. This can be explained that the dislocation density of linear dislocation formed the surface of the specimen becomes large along with the prolonging of blasting time.

In Fig.2, especially from enlarged drawing (B), in the sub-surface regions of specimen treated by the present invention, linear dislocation structure that distributed homogeneously caused by the fact that the plastic deformation caused homogeneously can be observed. In the drawing, black linear line is dislocation, and at the surface of the product, block of black part which is formed by accumulating dislocation can be observed. In Fig.2, whity part can be observed at the surface of product, however, this is caused by not meeting of observation condition because the crystal of whity part is slightly rotated against the crystal of black part, and by adjusting the observation condition said part becomes black and the existing of dislocation can be confirmed. In the meanwhile, according to Fig.3 of the transmission electron microscope picture of ceramics product to be treated using conventional technique, dislocation structure becomes a net work shape dislocated cell structure, which is a stabilized arrangement, by annealing treatment after plastic working. In this Figure, dislocation is accumulated at the black net work part and consequently dislocation density becomes high, and in whity part is the range where dislocation does not exist. Since dislocation does not exist at this whity part, it does not change color to black, even if the observation condition is changed. Thus, the structure obtained by the method for surface toughening of the present invention is remarkably different from the structure obtained by conventional technique.

Examples 23-26, Comparative Example 6

As the ceramics product to be processed, a specimen of rectangular board shape silicon carbide (SiC: 99.9%) of 6mm × 6mm × 20mm, which is the product of Ohmura Taika Co., Ltd., is used. Plastic working (shot blasting) is carried out by jetting abrasives vertically to the surface of specimen from the thickness direction, and measurements of dislocation density by TEM observation and Fracture toughness value are measured. In Table 6, conditions for plastic working (shot blasting) and results for quality characteristics of silicon carbide of before and after processing are shown.

Table 6 Measuring results of fracture toughness of silicon carbide

| No | specimen | | | abrasives | | | shot blasting condition | | | | surface roughness Ra $\mu$m | | hardness HV (after process) | dislocation density /cm$^2$ | $K_{IC}$ MPa·m$^{1/2}$ | improved ratio of $K_{IC}$ |
| | material | hardness HV | bending strength MPa | material | size $\mu$m | hardness HV | blasting | | | | before process | after process | | | | |
| | | | | | | | pressure MPa | amount g/min | speed m/s | time sec/cm$^2$ | | | | | | |
| Co.1 | silicon carbide | 2700 | 610 | — | — | — | — | — | — | — | — | — | — | — | 4.10 | 1.00 |
| Ex.23 | | 2700 | 610 | zircon | 200 | 810 | 0.35 | 400 | 50 | 12 | 0.277 | 0.280 | 2710 | $3.6\times10^8$ | 4.18 | 1.02 |
| Ex.24 | | 2700 | 610 | zirconia | 90 | 1380 | 0.15 | 400 | 45 | 4 | 0.281 | 0.303 | 2744 | $6.9\times10^{10}$ | 5.78 | 1.41 |
| Ex.25 | | 2700 | 610 | alumina | 100 | 1500 | 0.15 | 400 | 45 | 4 | 0.266 | 0.343 | 2770 | $1.3\times10^{11}$ | 6.36 | 1.55 |
| Ex.26 | | 2700 | 610 | alumina | 100 | 1500 | 0.35 | 400 | 60 | 4 | 0.269 | 0.382 | 2790 | $8.1\times10^{12}$ | 7.50 | 1.83 |

Co.: Comparative Example  Ex.: Example  $K_{IC}$: fracture toughness

EP 1 570 953 B1

From the results of Table 6, it is clearly understood that the fracture toughness of the processed products prepared according to the present invention is improved in proportion to dislocation density formed in the sub-surface regions of specimen after shot blasting treatment at room temperature likewise to the above mentioned testing results.

INDUSTRIAL APPLICABILITY

As mentioned above, by the present invention, it becomes possible to provide a method for surface toughening of ceramics product of energy-saving type. According to the present invention, the excellent effect that the resulting ceramics product whose surface toughness is improved can be contributed by not causing deterioration of physical properties caused by annealing treatment, because the method for surface toughening of the present invention does not need annealing treatment. Therefore, it is expected that the field in which ceramics can be used is broadly expanded.

**Claims**

1.  A method for surface toughening of a ceramic product comprising, forming uniformly distributed linear dislocation structure in the sub-surface regions in the range from the outer most surface of the ceramic product to $30\mu$m depth, wherein the dislocation density is in the range of from $1\times10^4$ to $9\times10^{13}$ cm$^{-2}$, without annealing treatment after a shot blasting treatment, the shot blasting treatment being effected by using abrasives composed of fine particles having convexly curved surface and having an average particle size of $0.1\mu$m to $250$ $\mu$m and a Vickers hardness (HV) of 500 or more and the hardness (HV) of the particles is +50 or less of that of the ceramic products.

2.  The method for surface toughening of a ceramic product of claim 1, wherein the uniformly distributed linear dislocation structure in the sub-surface regions of the ceramic product is formed without annealing by plastic working, carried out by shot blasting said abrasives at a pressure of 0.1 to 0.5 MPa, a shot blasting speed of 20 m/sec to 250 m/sec and a shot blasting time of from 0.1 sec/cm$^2$ to 60 sec/cm$^2$.

**Patentansprüche**

1.  Verfahren zur Verbesserung der Festigkeit der Oberfläche eines keramischen Produkts, umfassend die Bildung einer gleichmäßig verteilten linearen Dislokationsstruktur in den Regionen unterhalb der Oberfläche im Bereich von der äußersten Oberfläche des keramischen Produkts bis zu 30 $\mu$m Tiefe, wobei die Dislokationsdichte im Bereich von $1\times10^4$ bis $9\times10^{13}$ cm$^{-2}$ liegt, ohne Temperungsbehandlung nach einer Abstrahlbehandlung, wobei die Abstrahlbehandlung unter Verwendung von Strahlmitteln durchgeführt wird, die aus feinen Teilchen mit einer konvex gekrümmten Oberfläche zusammengesetzt sind und eine durchschnittliche Teilchengroße von 0,1 $\mu$m bis 250 $\mu$m und eine Vickers-Härte (HV) von 500 oder mehr aufweisen und die Härte (HV) der Teilchen +50 oder weniger, bezogen auf die Härte der keramischen Produkte, beträgt.

2.  Verfahren zur Verbesserung der Festigkeit der Oberfläche eines keramischen Produkts nach Anspruch 1, wobei die gleichmäßig verteilte lineare Dislokationstruktur in den Regionen unterhalb der Oberfläche des keramischen Produkts ohne Temperung durch plastische Verformung gebildet wird, die durch Abstrahlen mit den Strahlmitteln bei einem Druck von 0,1 bis 0,5 MPa, mit einer Abstrahlgeschwindigkeit von 20 m/sec bis 250 m/sec und mit einer Abstrahlzeit von 0,1 sec/cm$^2$ bis 60 sec/cm$^2$ durchgeführt wird.

**Revendications**

1.  Procédé pour durcir la surface d'un produit en céramique, comprenant la formation d'une structure de dislocations linéaires uniformément distribuées dans les régions sub-surfaciques dans l'intervalle depuis la surface la plus externe du produit en céramique à 30 $\mu$m de profondeur, dans lequel la densité des dislocations est dans l'intervalle compris entre $1\times10^4$ et $9\times10^{13}$ cm$^{-2}$, sans traitement de recuit après un traitement par grenaillage, le traitement par grenaillage étant effectué au moyen d'abrasifs composés de fines particules ayant une surface courbe convexe et ayant une taille moyenne des particules de 0,1 $\mu$m à 250 $\mu$m et une dureté Vickers (Hv) de 500 ou plus, et la dureté (Hv) des particules est égale à +50 ou moins par rapport à celle des produits en céramique.

2.  Procédé pour durcir la surface d'un produit en céramique selon la revendication 1, dans lequel la structure de dislocations linéaires uniformément distribuées dans les régions sub-surfaciques du produit en céramique est formée sans recuit par traitement plastique, effectué par grenaillage desdits abrasifs à une pression de 0,1 à 0,5 MPa, une vitesse de grenaillage de 20 m/s à 250 m/s et une durée de grenaillage de 0,1 sec/cm$^2$ à 60 sec/cm$^2$.

Fig.1

Fig.2

Surface of product

(A)

(B)

Fig.3

Surface of product

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0224605 A1
- JP 4331070 A
- JP 7157362 A

**Non-patent literature cited in the description**

- **W.J. Moon ; H. Saka.** *PHILOSOPHICAL MAGAZINE LETTERS,* 2000, vol. 80 (7), 461-466